Europäisches Patentamt

(19) European Patent Office    (11) Numéro de publication: **0 138 699**

Office européen des brevets    **B1**

(12)    **FASCICULE DE BREVET EUROPEEN**

(45) Date de publication du fascicule du brevet: **18.05.88**    (51) Int. Cl.⁴: **G 11 B 27/32, G 11 B 27/00, G 11 B 5/53**

(21) Numéro de dépôt: **84402006.5**

(22) Date de dépôt: **05.10.84**

(54) **Magnétophone permettant la lecture d'un code temporel quelle que soit la vitesse de défilement de la bande magnétique.**

<table>
<tr><td>(30) Priorité: <b>11.10.83 FR 8316139</b></td><td>(73) Titulaire: <b>THOMSON-CSF<br>173, Boulevard Haussmann<br>F-75379 Paris Cédex 08 (FR)</b></td></tr>
<tr><td>(43) Date de publication de la demande:<br><b>24.04.85 Bulletin 85/17</b></td><td></td></tr>
<tr><td>(45) Mention de la délivrance du brevet:<br><b>18.05.88 Bulletin 88/20</b></td><td>72 Inventeur: <b>Tassery, Michel<br>THOMSON-CSF SCPI 173, bld Haussmann<br>F-75379 Paris Cedex 08 (FR)</b></td></tr>
<tr><td>(84) Etats contractants désignés:<br><b>DE GB</b></td><td>74 Mandataire: <b>Turlèque, Clotilde et al<br>THOMSON-CSF SCPI 19, avenue de Messine<br>F-75008 Paris (FR)</b></td></tr>
<tr><td>(56) Documents cités:<br><b>FR-A-1 168 424<br>FR-A-1 459 976<br>US-A-2 539 837<br>US-A-3 197 575<br>US-A-3 230 307</b></td><td></td></tr>
<tr><td><b>IBM TECHNICAL DISCLOSURE BULLETIN, vol.<br>10, no. 12 mai 1968, pages 1849-1850, New<br>York, US; C.J. DAVIS et al.: "Sampling device<br>for magnetically recorded information"</b></td><td></td></tr>
<tr><td><b>JOURNAL OF THE SOCIETY OF MOTION<br>PICTURE AND TELEVISION ENGINEERS, vol.<br>88, no. 10, octobre 1979, pages 712-715,<br>Scarsdale, N.Y., US; G.W. BATES et al.: "Time<br>code error correction utilizing a<br>microprocessor"</b></td><td></td></tr>
</table>

Courier Press, Leamington Spa, England.

EP 0 138 699 B1

## Description

L'invention concerne les magnétophones qui sont utilisés parallèlement à des magnétoscopes dans le but d'enregistrer sur deux bandes magnétiques distinctes, d'un part un signal audio et, d'autre part, un signal vidéo. L'enregistrement du signal audio sur une bande magnétique autre que celle du magnétoscope permet d'obtenir une qualité sonore meilleure. Pour faire le montage des séquences il est nécessaire de repérer et de synchroniser les enregistrements audio et les enregistrements vidéo.

Le brevet US 3 230 307 décrit un système permettant de synchroniser plusieurs magnétoscopes, chaque magnétoscope comportant: une tête de lecture lisant, sur une piste longitudinale, une impulsion pour chaque trame; un dispositif d'asservissement de la vitesse du cabestan en fonction des impulsions lues et en fonction d'une suite d'impulsions de référence. Ce brevet suggère d'utiliser, pour la tête de lecture des impulsions, une tête tournante ou une tête à effet Hall pour permettre la détection d'une impulsion de synchronisation sur la bande, même si celle-ci a une vitesse pratiquement nulle. Ce système permet de maintenir la synchronisation du défilement des bandes de plusieurs magnétoscopes, à partir d'une trame de départ déterminée sur chaque bande. Mais il ne permet pas de trouver facilement cette trame de départ sur chaque bande, car les impulsions lues sont identiques pour toutes les trames.

Pour repérer facilement chaque trame, les organismes SMPTE et EBU ont défini une norme spécifiant un code numérique et un procédé de modulation permettant d'enregistrer sur la bande vidéo et sur la bande audio des signaux de repérage et de synchronisation.

Selon cette norme, à chaque image vidéo (deux trames) est associé un mot de code comportant 80 bits, constitué par des bits d'informations temporelles, et des bits de commande. Les bits d'informations temporelles codent les dizaines d'heures, les heures, les dizaines de minutes, les minutes, les dizaines de secondes, les secondes, les dizaines d'images, et les images. Les 16 derniers bits du mot de code constituent un mot de synchronisation permettant de repérer le mot de code et le sens de défilement de la bande.

Le procédé de modulation normalisé est tel qu'une première transition de niveau logique apparaît au début de chaque période de bits. Dans le cas d'un 0 il n'y a pas de seconde transition pendant la période du bit. Dans le cas d'un 1, une seconde transition apparaît une demi-période après le début du bit.

Sur une bande vidéo, le mot de code peut être enregistré sur un piste indépendante de la piste vidéo et qui est appelée piste audio 3 ou piste "cue". Un autre procédé consiste à l'enregistrer sur la piste de l'enregistrement vidéo, dans l'intervalle de suppression de trame séparant chaque image de la suivante. Sur une bande magnétique audio, le mot de code est enregistré sur une piste indépendante des pistes audio. A la lecture, le décodage du mot de code est réalisé par des dispositifs connus permettant la lecture et le décodage quelle que soit la vitesse de défilement de la bande magnétique entre $\frac{1}{5}$ et cent fois la vitesse nominale de lecture, que ce soit sur la bande vidéo ou sur la bande audio.

Dans le cas d'un arrêt sur image la vitesse de la bande vidéo est nulle, la lecture du mot de code n'est possible que s'il est enregistré dans l'intervalle de suppression de trame. Dans ce cas, la lecture est effectuée par la tête magnétique chargée de la lecture du signal vidéo; cette tête étant montée sur un tambour rotatif, la lecture du mot de code s'effectue pendant l'arrêt sur image de la même façon que la lecture du signal vidéo. Si le mot de code est enregistré sur la piste audio 3, la lecture du mot de code n'est possible que lorsque la bande est en translation à une vitesse au moins égale à $\frac{1}{5}$ de la vitesse nominale, et il en est de même pour la lecture du mot de code sur la bande magnétique audio. Sur un magnétoscope le problème est résolu en enregistant le mot de code dans l'intervalle de suppression de trame, par contre pour le magnétophone il n'existe pas de procédé permettant de résoudre ce problème.

L'impossibilité de lire le code temporel de la bande audio pendant un arrêt sur image a pour conséquence de rendre délicate la synchronisation entre le son et l'image lors du montage des séquences.

· Le magnétophone selon l'invention résout ce problème grâce à une tête magnétique mobile permettant la lecture du mot de code quelle que soit la vitesse de la bande magnétique, même si cette vitesse est nulle.

Selon l'invention un magnétophone permettant la lecture d'un code temporel et comportant: au moins une tête de lecture fixe pour lire des informations audio enregistrées sur au moins une piste longitudinale d'une bande magnétique; et au moins une tête de lecture pour lire un code temporel enregistré sur une piste longitudinale indépendante de la piste ou des pistes audio, la vitesse relative de déplacement de la tête de lecture du code temporel, par rapport à la bande magnétique, devant être comprise entre des limites prédéterminées pour que le code temporel puisse être lu; est caractérisé en ce que la tête de lecture du code temporel peut tourner selon une trajectoire balayant un segment de la piste du code temporel; et en ce qu'il comporte en outre:

— un moteur asservi pour faire tourner la tête de lecture du code temporel dans le sens opposé au sens de déplacement de la bande magnétique;

— un dispositif d'asservissement commandant le moteur pour qu'il y ait toujours un déplacement de la tête de lecture du code temporel avec une vitesse relative de déplacement, par rapport à la piste du code temporel, qui soit comprise entre lesdites limites prédéterminées, quelle que soit la vitesse absolue de déplacement de la bande;

— un décodeur de code temporel, relié à la tête de lecture pour décoder le code temporel et pour fournir des signaux d'asservissement au dispositif d'asservissement.

L'invention sera mieux comprise à l'aide de la description ci-dessous et des figures l'accompagnant:

— La figure 1 représente le schéma synoptique d'un exemple de réalisation du magnétophone selon l'invention;

— La figure 2 représente des diagrammes temporels illustrant le fonctionnement de cet exemple de réalisation.

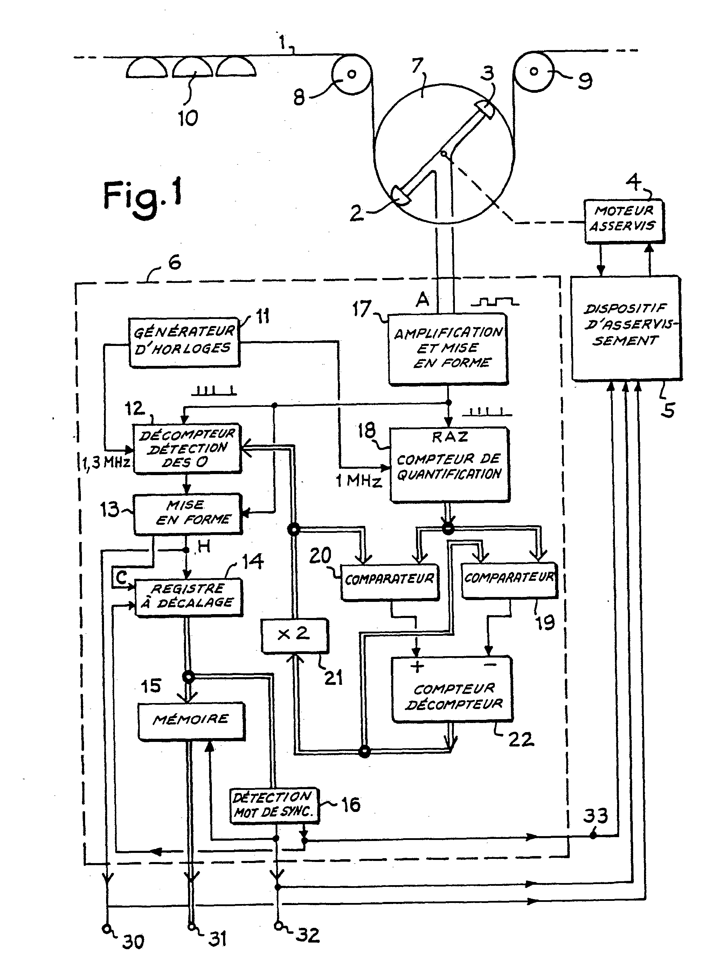

Sur la figure 1, cet exemple de réalisation comporte une bande magnétique 1 défilant devant des têtes classiques 10 d'enregistrement et de lecture des signaux audio, en étant guidée par des galets 8 et 9 et en passant autour d'un tambour rotatif 7 portant deux têtes, 2 et 3, de lecture des mots de code. Les mots de code sont enregistrés sur une piste parallèle aux pistes audio et indépendante de celles-ci. Les têtes de lecture 2 et 3 sont situées aux deux extrémités d'un diamètre du tambour rotatif 7 et les galets 8 et 9 sont disposés de façon telle que la bande magnétique soit en contact avec le tambour 7 sur une surface légèrement supérieure à la moitié de sa périphérie. En général pendant que la tête de lecture 2 est en contact avec la bande magnétique la tête de lecture 3 ne l'est pas et réciproquement. Les têtes 2 et 3 sont reliées électriquement en série, il y a donc continuellement lecture de la piste des mots de code par l'une de ces deux têtes. Le diamètre du tambour est choisi tel qu'un enregistrement d'un mot de synchronisation est diamètralement opposé à un enregistrement d'un autre mot de synchronisation. Les informations binaires contenues dans les mots de code sont décodées par un décodeur 6 relié aux têtes 2 et 3. La lecture et le décodage peuvent être réalisés dans les deux sens de défilement.

Le tambour rotatif 7 est mû par un moteur asservi 4 commandé par un dispositif d'asservissement 5. Le moteur asservi 4 envoie au dispositif d'asservissement 5 un signal de position pour lui permettre à chaque instant de connaître la position et la vitesse absolue de rotation des têtes 2 et 3. Dans cet exemple de réalisation, la vitesse relative des têtes de lecture 2 et 3 par rapport à la bande 1 est asservie pour être constante et égale à la vitesse nominale de la bande magnétique, quand la vitesse absolue de défilement de la bande est comprise entre une vitesse nulle et la vitesse nominale. Quand la vitesse absolue a sa valeur nominale, le tambour rotatif 7 a une vitesse de rotation nulle et l'asservissement fonctionne comme un asservissement de position. La phase de rotation du tambour rotatif 7, ou sa position, est définie en fonction de la phase d'un signal d'horloge à la fréquence des bits et d'un signal à la fréquence des mots de synchronisation, fournis par le décodeur 6, en fonction du signal lu sur la piste du code.

Quand la bande magnétique a une vitesse absolue de défilement supérieure à la vitesse de défilement nominale, et pouvant aller jusqu'à 100 fois cette vitesse nominale, le tambour rotatif 7 est maintenu à l'arrêt par l'asservissement qui fonctionne alors en asservissement de position et le décodeur 6 fonctionne d'une manière identique au fonctionnement avec une tête de lecture fixe dans les dispositifs connus, c'est-à-dire qu'il suit les variations de vitesse de la bande magnétique.

L'asservissement maintient une position, ou une phase de rotation, des têtes 2 et 3, telle qu'une lecture simultanée par les deux têtes ne peut avoir lieu que pour les mots de synchronisation.

Le décodeur 6 peut être, par exemple, le décodeur TTV4020 commercialisé par THOMSON-CSF. Le décodeur 6 possède quatre bornes de sortie 30, 31, 32 et 33; les bornes 30, 32 et 33 étant reliées au dispositif d'asservissement 5 pour lui fournir respectivement un signal à la fréquence des bits, un signal à la fréquence des mots de code, et un signal indiquant le sens de défilement de la bande 1. La borne de sortie 31 fournit un mot binaire de 80 bits constitué du mot de code lu sur la bande magnétique.

Le dispositif 6 comporte un générateur d'horloge 11, un décompteur 12, un dispositif 13 de mise en forme, un registre à décalage 14, une mémoire 15, un dispositif 16 de détection des mots de synchronisation, un dispositif 17 d'amplification et de mise en forme, un compteur 18, deux comparateurs 19 et 20, un dispositif 21 de multiplication par deux, et un compteur-décompteur 22.

Le dispositif 17 d'amplification et de mise en forme reçoit un signal A fourni par les têtes de lecture 2 et 3. Ce signal est un signal binaire où chaque bit du mot de code est codé en série, une valeur 1 étant codée par deux transitions successives alors qu'une valeur 0 est codée par une seule transition. Le dispositif 17 fournit un signal d'amplitude définie, constitué d'une impulsion de faible durée pour chaque front montant ou descendant du signal A. Ces impulsions sont appliquées à une entrée de remise à zéro du compteur 18, dit compteur de quantification. Celui-ci reçoit un signal d'horloge de fréquence 1 MHz, fourni par le générateur d'horloge 11.

Une sortie du compteur 18 fournit un mot binaire dont la valeur est proportionnelle au temps écoulé depuis la dernière remise à zéro par une impulsion correspondant à une transition du signal A, et ce mot binaire est fourni à une première entrée du comparateur 19 et à une première entrée du comparateur 20. Une seconde entrée du comparateur 19 reçoit un mot binaire fourni par une sortie du compteur-décompteur 22, et une seconde entrée du comparateur 20 reçoit le même mot binaire, mais dont la valeur est multipliée par deux grâce à un décalage réalisé par le dispositif 21. La valeur du mot binaire fourni par le compteur-décompteur 22 correspond, à chaque instant, à la durée pendant laquelle le signal A garde un niveau constant pour la transmission d'une valeur 0, durée qui varie avec la vitesse de défilement de la bande.

Lorsque l'intervalle de temps entre deux transitions du signal A est inférieur à la valeur fournie par le compteur-décompteur 22 le comparateur 19 fournit un signal logique commandant le compteur-décompteur 22 pour décrémenter son contenu. Lorsque l'intervalle de temps entre deux transitions successives du signal A est supérieur au double de la valeur fournie par le compteur-décompteur 22 le comparateur 20 fournit un signal de commande au compteur-décompteur 22 pour incrémenter son contenu. La valeur fournie par le dispositif 21 de multiplication par deux est utilisée comme référence de durée pour détecter les valeurs 0 transmises par le signal A, au moyen du décompteur 12.

Cette valeur est appliquée à une entrée de préchargement du décompteur 12, dit décompteur de détection des 0. Le décompteur 12 reçoit en outre le signal fourni par le dispositif 17 d'amplification et de mise en forme, et un signal d'horloge à la fréquence 1,333 MHz. Les impulsions correspondant aux transitions du signal A provoquent le chargement dans le décompteur 12 de la valeur fournie par le dispositif 21. Quand le contenu du décompteur 12 passe par la valeur 0, ce qui n'est le cas que pour les intervalles correspondant à la transmission d'une valeur 0, une sortie du décompteur 12 fournit un signal logique au dispositif 13 de mise en forme. Les intervalles de temps entre deux transitions du signal A qui correspondent à la transmission d'une valeur 1 ont une durée trop courte pour que la valeur préchargée soit complétement décomptée, l'impulsion suivante provoque donc un nouveau préchargement avant que le contenu du décompteur 12 ait été décompté jusqu'à 0. Le signal logique fourni par la sortie du décompteur 12 correspond à la transmission d'une valeur 0, dans le cas contraire.

Ce signal est appliqué au dispositif 13 de mise en forme ainsi que le signal fourni par la sortie du dispositif 17. Le dispositif 13 restitue un signal d'horloge H à la fréquence des bits, obtenu à partir du signal A et du signal fourni par la sortie du dispositif 17, en créant dans le signal A une transition, montante ou descendante selon son niveau logique, aux instants où le décompteur 12 passe par la valeur 0. Le signal H ainsi obtenu est un signal ayant la fréquence des bits mais dont le rapport cyclique est variable. D'autre part le dispositif 13 décode la suite des valeurs transmises, à partir de la suite d'impulsions fournies par la sortie du dispositif 17 et à partir du signal logique fourni par le décompteur 12. Une sortie du dispositif 13 fournit donc un signal logique C où une valeur 0 est représentée par un niveau logique bas et une valeur 1 par un niveau logique haut. Ces valeurs sont transmises sous forme série, au registre à décalage 14 où elles sont stockées sous l'action du signal d'horloge H.

Lorsque les 80 bits d'un mot de code sont disponibles dans le registre à décalage 14, le dispositif 16 de détection du mot de synchronisation détecte que les 16 derniers bits stockés dans le registre à décalage 14 ont la valeur attendue pour le mot de synchronisation. Le dispositif 16 génère alors un signal logique provoquant la mémorisation sous forme parallèle du contenu du registre 14 dans la mémoire 15 qui constitue une mémoire tampon pour fournir le mot de code à la borne de sortie 31. D'autre part, le signal fourni par le dispositif 16 est appliqué à la borne de sortie 32 et au dispositif d'asservissement 5. Le signal d'horloge H est appliqué à la borne de sortie 30 et au dispositif d'asservissement 5.

Le dispositif 16 permet de détecter le mot de synchronisation quel que soit le sens de défilement de la bande magnétique 1 et il fournit un signal supplémentaire indiquant ce sens de défilement. Ce signal supplémentaire est fourni au dispositif d'asservissement 5, et au registre 14 pour commander le sens du décalage dans ce registre.

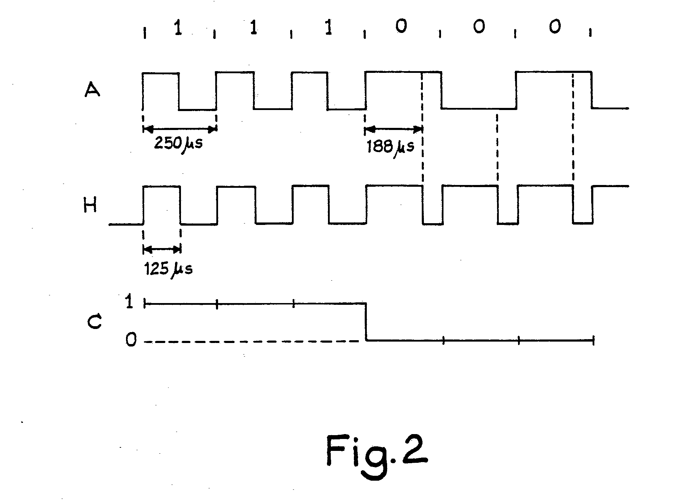

La figure 2 représente les diagrammes temporels du signal A, du signal H et du signal C, lors de la lecture des valeurs 111000, lorsque la vitesse relative des têtes de lecture 2 et 3 par rapport à la bande 1 est égale à la vitesse nominale de défilement de la bande. La période des bits est alors de 250 microsecondes. Le signal H est identique au signal A pendant les périodes où les valeurs transmises sont des 1, par contre il est constitué d'impulsions positives de durée 188 microsecondes lorsque les valeurs transmises sont des 0, car le passage à zéro du décompteur 12 a lieu 188 microsecondes après l'impulsion de préchargement qui correspond au début de la période d'un bit, la fréquence d'horloge du décompteur 12 étant égale à 1,3 MHz pour que le contenu du décompteur 12 passe par la valeur 0 après une durée de décomptage intermédiaire entre la durée (125 microsecondes) du signal A pour une valeur 1 et la durée (250 microsecondes) du signal A pour une valeur 0. Le signal H est constitué d'un signal impulsionnel dont la période est de 250 microsecondes mais où la durée des impulsions au niveau 1 est tantôt de 125 microsecondes, et tantôt de 188 microsecondes. Le signal C restitue les bits du mot de code, sous la forme classique d'un niveau logique haut pour une valeur 1 et d'un niveau logique bas pour une valeur 0.

D'autres exemples de réalisation peuvent comporter un nombre de têtes de lecture différent, ces têtes étant éventuellement commutées automatiquement au cours de la rotation du tambour. Le nombre de têtes de lecture doit être d'autant plus grand que le secteur de tambour en contact avec la bande est plus petit. Par exemple, si ce secteur correspond à un tiers de la périphérie du tambour il est nécessaire d'utiliser trois têtes de lecture réparties régulièrement sur la périphérie du tambour, pour éviter qu'à certains instants aucune des têtes de lecture ne soit en contact avec la bande magnétique.

Il est à la portée de l'homme de l'art de réaliser différemment le dispositif de décodage 6 et de l'adapter pour fournir un signal d'asservissement.

La réalisation du moteur asservi 4 et du dispositif d'asservissement 5 sont très classiques dans le domaine des magnétoscopes.

Il est possible de réguler la vitesse relative des têtes de lecture, 2 et 3, à une valeur différente de la valeur absolue nominale de défilement de la bande 1, puisque le décodeur 6 peut fonctionner lorsque cette vitesse relative est comprise entre ⅕ et 100 fois la vitesse nominale.

## Revendications

1. Magnétophone permettant la lecture d'un code temporel et comportant: au moins une tête de lecture fixe (10) pour lire des informations audio enregistrées sur au moins une piste longitudinale d'une bande magnétique (1); et au moins une tête de lecture (2, 3) pour lire un code temporel enregistré sur une piste longitudinale indépendante de la piste ou des pistes audio, la vitesse relative de déplacement de la tête (2, 3) de lecture du code temporel, par rapport à la bande magnétique (1), devant être comprise entre des limites prédéterminées pour que le code temporel puisse être lu; caractérisé en ce que la tête (2, 3) de lecture du code temporel peut tourner selon une trajectoire balayant un segment de la piste du code temporel; et en ce qu'il comporte en outre:

— un moteur asservi (4) pour faire tourner la tête (2, 3) de lecture du code temporel dans le sens opposé au sens de déplacement de la bande magnétique (1);

— un dispositif (5) d'asservissement commandant le moteur (4) pour qu'il y ait toujours un déplacement de la tête (2, 3) de lecture du code temporel avec une vitesse relative de déplacement, par rapport à la piste du code temporel, qui soit comprise entre lesdites limites prédéterminées, quelle que soit la vitesse absolue de déplacement de la bande (1);

— un décodeur (6) de code temporel, relié à la tête de lecture (2, 3) pour décoder le code temporel et pour fournir des signaux d'asservissement au dispositif d'asservissement (5).

2. Magnétophone selon la revendication 1, caractérisé en ce que, quel que soit le sens de défilement de la bande magnétique (1),

— si la vitesse absolue de défilement de la bande magnétique (1) est inférieure à sa valeur nominale, le dispositif (5) d'asservissement maintient une vitesse relative prédéterminée, entre le tête de lecture (2, 3) et la bande (1);

— se la vitesse absolue de défilement de la magnétique (1) est supérieure ou égale à sa valeur nominale, le dispositif (5) d'asservissement fixe la position de la tête de lecture (2, 3) en fonction de la phase du signal lu sur la piste du code temporel.

3. Magnétophone selon la revendication 1, caractérisé en ce qu'il comporte une pluralité de têtes de lecture (2, 3) répartie régulièrement à la périphérie d'un tambour rotatif (7), mû par le moteur asservi (4);

et des moyens (8, 9) de guidage de la bande magnétique (1) maintenant celle-ci en contact avec le tambour (7) sur une surface suffisante pour qu'il y ait toujours au moins une tête de lecture (2, 3) en contact avec la bande (1), et pour qu'il y ait toujours au moins un mot complet du code temporel sur cette surface.

4. Magnétophone selon la revendication 3, caractérisé en ce qu'il comporte deux têtes de lecture (2, 3) situées aux deux extrémités d'un diamètre du tambour rotatif (7); en ce qu'elles sont reliées électriquement en série; et en ce que la surface de contact de la bande (1) sur le tambour (7) correspond à au moins la moitié de la périphérie de celui-ci.

## Patentansprüche

1. Magnetophon zum Auslesen eines zeitlichen Codes, versehen mit: wenigstens einem festen Lesekopf (10) zum Auslesen der auf wenigstens einer längs verlaufenden Spur eines Magnetbandes (1) aufgezeichneten Toninformationen; und wenigstens einem Lesekopf (2, 3) zum Auslesen eines zeitlichen Codes, welcher auf einer längs verlaufenden Spur aufgezeichnet ist, die unabhängig von der Tonspur bzw. den Tonspuren ist, wobei die relative Bewegungsgeschwindigkeit des Kopfes (2, 3) zum Auslesen des zeitlichen Codes bezüglich des Magnetbandes (1) zwischen vorbestimmten Grenzen liegen muß, damit der zeitliche Code ausgelesen werden kann; dadurch gekennzeichnet, daß der Kopf (2, 3) zum Auslesen des zeitlichen Codes entlang einer Bahn rotieren kann, die ein Segment der Spur für den Zeitlichen Code abtastet; und daß es ferner enthält:

— einen geregelten Motor (4), um den Kopf (2, 3) zum Auslesen des zeitlichen Codes im entgegengesetzten Sinne zur Bewegungsrichtung des Magnetbandes (1) rotieren zu lassen;

— eine Regelvorrichtung (5), welche den Motor (4) so ansteuert, daß stets eine Bewegung des Kopfes (2, 3) zum Auslesen des zeitlichen Codes mit einer relativen Bewegungsgeschwindigkeit bezüglich der Spur des zeitlichen Codes besteht, die zwischen den vorbestimmten genannten Grenzen liegt, unabhängig von der Absolutgeschwindigkeit der Bandbewegung (1);

— einen Decoder (6) zum Decodieren des zeitlichen Codes, welcher an den Lesekopf (2, 3) angeschlossen ist, um den zeitlichen Code zu decodieren und um Regelsignale an die Regelvorrichtung (5) abzugeben.

2. Magnetophon nach Anspruch 1, dadurch gekennzeichnet, daß unabhängig vom Bewegungssinn des Magnetbandes (1),

— die Regelvorrichtung (5), wenn die Absolutgeschwindigkeit der Bewegung des Magnetbandes (1) kleiner als ihr Nennwert ist, eine vorbestimmte Relativgeschwindigkeit zwischen dem Lesekopf (2, 3) und dem Band (1) aufrechterhält,

— die Regelvorrichtung (5), wenn die Absolutgeschwindigkeit der Bewegung des Magnetbandes (1) größer als der oder gleich dem Nennwert ist, die Position des Lesekopfes (2, 3) in Abhängigkeit von der Phase des Signals festlegt, welches auf der Spur des zeitlichen Codes ausgelesen wird.

3. Magnetophon nach Anspruch 1, dadurch gekennzeichnet, daß es mehrere Leseköpfe (2, 3) umfaßt, die regelmäßig am Umfang einer rotierenden Trommel (7) verteilt sind, welche durch den geregelten Motor (4) bewegt wird; und Mittel (8, 9) zur Führung des Magnetbandes (1) umfaßt, welche dieses über eine ausreichend große Oberfläche in Berührung mit der Trommel (7) halten, damit immer wenigstens ein Lesekopf (2, 3) in Berührung mit dem Band (1) ist, und damit stets wenigstens ein vollständiges Wort des zeitlichen Codes auf dieser Oberfläche vorhanden ist.

4. Magnetophon nach Anspruch 3, dadurch gekennzeichnet, daß es zwei Leseköpfe (2, 3) umfaßt, die an den zwei Enden eines Durchmessers der rotierenden Trommel (7) liegen; daß sie elektrisch in Reihe geschaltet sind; und daß die Kontaktoberfläche des Bandes (1) an der Trommel (7) wenigstens der Hälfte des Umfanges derselben entspricht.

**Claims**

1. Magnetic recorder permitting the reading of a time code and comprising: at least one fixed reading head (10) for reading the audio information recorded on at least one longitudinal track of a magnetic tape (1); and at least one reading head (2, 3) for reading a time code recorded on a longitudinal track independent of the audio track or tracks, the relative moving speed of the time code reading head (2, 3) with respect to the magnetic tape (1) having to be comprised between predetermined limits so that the time code can be read; characterized in that the time code reading head (2, 3) can rotate along a path scanning a segment of the time code track; and in that it further comprises:
— a controlled motor (4) for rotating the time code reading head (2, 3) in a sense opposite to the moving direction of the magnetic tape (1);

— a control device (5) controlling the motor (4) so that there is always a movement of the time code reading head (2, 3) with a relative moving speed with respect to the time code track which is comprised between said predetermined limits independent of the absolute moving speed of the tape (1);
a time code decoder (6) connected to the reading head (2, 3) for decoding this time code and supplying control signals to the control device (5).

2. Magnetic recorder according to claim 1, characterized in that independent of the moving direction of the magnetic tape (1)
— if the absolute moving speed of the magnetic tape (1) is smaller than its nominal value, the control device (5) maintains a predetermined relative speed between the reading head (2, 3) and the tape (1);
— if the absolute moving speed of the magnetic tape (1) is greater than or equal to its nominal value, the control device (5) fixes the position of the reading head (2, 3) as a function of the phase of the signal read on the time code track.

3. Magnetic recorder according to claim 1, characterized in that it comprises a plurality of reading heads (2, 3) regularly distributed on the periphery of a rotary drum (7) driven by the controlled motor (4); and means (8, 9) for guiding the magnetic tape (1) maintaining the latter in contact with the drum (7) over a sufficient surface so that there is always at least one reading head (2, 3) contacting the tape (1), and that there is always at least one complete word of the time code on this surface.

4. Magnetic recorder according to claim 3, characterized in that it comprises two reading heads (2, 3) located at the two ends of a diameter of the rotary drum (7), that they are electrically connected in series; and in that the contacting surface of the tape (1) on the drum (7) corresponds to at least one half of the periphery of the latter.

**0 138 699**

Fig.1

Fig.2